**Europäisches Patentamt**

**European Patent Office**

**Office européen des brevets**

(11) Veröffentlichungsnummer: **0 192 156**
**A2**

## (12) EUROPÄISCHE PATENTANMELDUNG

(21) Anmeldenummer: **86101668.1**

(22) Anmeldetag: **10.02.86**

(51) Int. Cl.⁴: **G 11 B 33/04**
**G 11 B 23/02**

(30) Priorität: **22.02.85 DE 3506177**

(43) Veröffentlichungstag der Anmeldung:
**27.08.86 Patentblatt 86/35**

(84) Benannte Vertragsstaaten:
**AT BE CH DE FR GB IT LI NL SE**

(71) Anmelder: **Schmidt-Webering, Jürgen**
**Brinkstrasse 4**
**D-4408 Dülmen 3(DE)**

(72) Erfinder: **Schmidt-Webering, Jürgen**
**Brinkstrasse 4**
**D-4408 Dülmen 3(DE)**

(74) Vertreter: **Habbel, Hans-Georg, Dipl.-Ing.**
**Postfach 3429 Am Kanonengraben 11**
**D-4400 Münster(DE)**

(54) **Kassettenspender.**

(57) Die Erfindung bezieht sich auf einen Kassettenspender, insbesondere für Compact-Disc mit einem Gehäuse, Trennwänden, die das Gehäuse in je einer Kassette zugeordnete Fächer unterteilen, wobei jedem Fach ein Auswerfer zugeordnet ist, der einen an der Frontseite des Gehäuses betätigbaren Betätigungsknopf aufweist und über ein im Gehäuseboden und innen an der Gehäuserückwand angeordnetes Hebelgestänge auf die Rückseite der Kassette wirkt, wobei der Betätigungsknopf mit einer im Gehäuseboden in Längsrichtung der Kassette verschiebbaren Schubstange verbunden und innen an der Gehäuserückwand in Richtung der Schubstange schwenkbar ein Kipphebel gelagert ist, dessen eines Hebelende von der Schubstange beaufschlagbar ist und dessen anderes Hebelende an der Rückseite der Kassette anliegt.

Fig. 1

EP 0 192 156 A2

"Kassettenspender"

Die Erfindung bezieht sich auf einen Kassettenspender gemäß dem Oberbegriff des Hauptanspruches.

Compact-Discs sollen möglichst platzsparend und staubgeschützt in einem Regal untergebracht werden, ohne daß dadurch der Zugriff auf einzelne Compact-Discs erschwert wird.

Um einen guten Zugriff auf einzelne Compact-Discs zu ermöglichen, ist es üblich, die Compact-Discs entweder in Regalen zu lagern, die nach oben und nach den Seiten offen sind, oder Regale zu verwenden, bei denen die Compact-Discs vorne ein Stück herausstehen. Weiterhin ist es üblich, die Zwischenräume zwischen den Compact-Discs so groß zu gestalten, daß ein Zugriff mit den Fingerspitzen ermöglicht wird. Außerdem besteht die Möglichkeit, Compact-Discs in karteikastenähnlichen Boxen zu lagern (Zeitschriften Audio, Stereo, Stereoplay, Hefte 3/83 bis 2/85).

Bei den nach oben und nach den Seiten offenen "Compact-Disc-Regalen" ist ein Staubschutz überhaupt nicht gewährleistet. Außerdem lassen sich solche Regale nicht übereinanderstellen, was bei einer Erweiterung den Platzbedarf erhöht.

Die "Compact-Disc-Regale", bei denen die Compact-Discs vorne herausstehen, gewähren nur unvollständigen Staubschutz, wogegen die karteikästenähnlichen Compact-Disc Boxen durch ihren Deckel einen optimalen Staubschutz bieten, sich dafür aber nicht stapeln lassen. Außerdem läßt die Übersichtlichkeit zu wünschen übrig.

Aus der DE-AS 25 52 835 ist ein gattungsbildender Kassettenspender bekannt, bei welchem im Gehäuseboden unterhalb der Kassette ein quer zur Kassettenlängsachse schwenkbarer Kipphebel gelagert ist, der an seinem vorderen Ende einen Tastenknopf trägt, der eine nach oben gerichtete Lippe aufweist, die bei eingesetzter Kassette die Kassette in der eingesetzten Lage versperrt oder verriegelt. Mit dem Kipphebel ist ein Kniehebel verbunden, der an der Rückseite der Gehäuseinnenwand angeordnet ist und ein über seine Länge gesehen mittleres Kippgelenk aufweist, so daß bei einem Anheben des zur Gehäuseinnenwand gerichteten Endes des Kipphebels der Kniehebel im Kippgelenk abgeknickt wird und damit die Kassette diese nach vorne schiebend beaufschlagt.

Die Kraft, mit der die Kassette ausgeworfen wird, hängt einerseits von der Spannung ab, unter der der Kniehebel steht, wenn die Kassette in der eingeschobenen Stellung verrastet ist und andererseits von der Kraft, mit der der Kniehebel bei Betätigen der Taste und der damit erfolgenden Bewegung ausgeknickt wird, wobei, da die Lippe die Kassette verriegelt und erst nach einem gewissen Weg des Kipphebels die Kassette freigibt, hier eine Vorspannung entsteht, mit der die Kassette nach Freigabe durch die Lippe ausgeschleudert wird.

Diese bekannte Anordnung führt zu einem ruckartigen Ausschleudern der Kassette, so daß die Kassette ganz aus ihrem Fach herausgeworfen werden kann. Außerdem beaufschlagt die Kassette bei ihrer Auswerfbewegung den Finger des die Auslösetaste Betätigenden. Insgesamt ist ein solcher Kassettenspender für eine schonende Behandlung der Kassette nicht geeignet.

Der Erfindung liegt die Aufgabe zugrunde, den gattungsbildenden Kassettenspender dahingehend zu verbessern, daß bei Betätigen des Betätigungsknopfes das Ausschieben der Kassette rein mechanisch, d.h. ohne Einwirkung einer Federkraft, erfolgt.

Diese der Erfindung zugrundeliegende Aufgabe wird durch die Lehre des kennzeichnenden Teiles des Hauptanspruches gelöst.

Bei der erfindungsgemäßen Einrichtung ist also die Vorschubbewegung der Kassette nur abhängig und damit steuerbar vom Druck, den die Bedienungsperson auf den Betätigungsknopf ausübt, d.h. die Kassette wird nicht ausgeschleudert, sondern nur rein mechanisch nach außen vorgeschoben. In Abhängigkeit der Größe des an der Gehäuserückwand schwenkbar gelagerten Kipphebels ist dieser Vorschubweg wählbar. Hierbei kann die Anordnung so getroffen werden, daß die Kassette mit dem Finger des den Kassettenspender Bedienenden nicht in Kontakt kommt. Die Kassette wird in dem Kassettenspender frei gehalten, steht also nicht unter einer Klemm- oder Federspannung während ihrer Lagerung im Kassettenspender.

Gemäß einer bevorzugten Ausführungsform der Erfindung wird die Vorrichtung gemäß dem Hauptanspruch so ausgebildet, daß der Kipphebel gegen die Wirkung einer Rückstellkraft, beispielsweise einer gummielastischen Feder od. dgl., verstellbar ist, d.h. der Kipphebel wird nach Loslassen des Betätigungsknopfes wieder in seine Ausgangsstellung zurückgeführt.

Ein Ausführungsbeispiel der Erfindung wird nachfolgend anhand der Zeichnungen erläutert. Die Zeichnungen zeigen dabei in

Fig. 1      eine Frontansicht auf den Kassettenspender, in

Fig. 2      einen Schnitt gemäß der Linie A - A in Fig. 1 und in

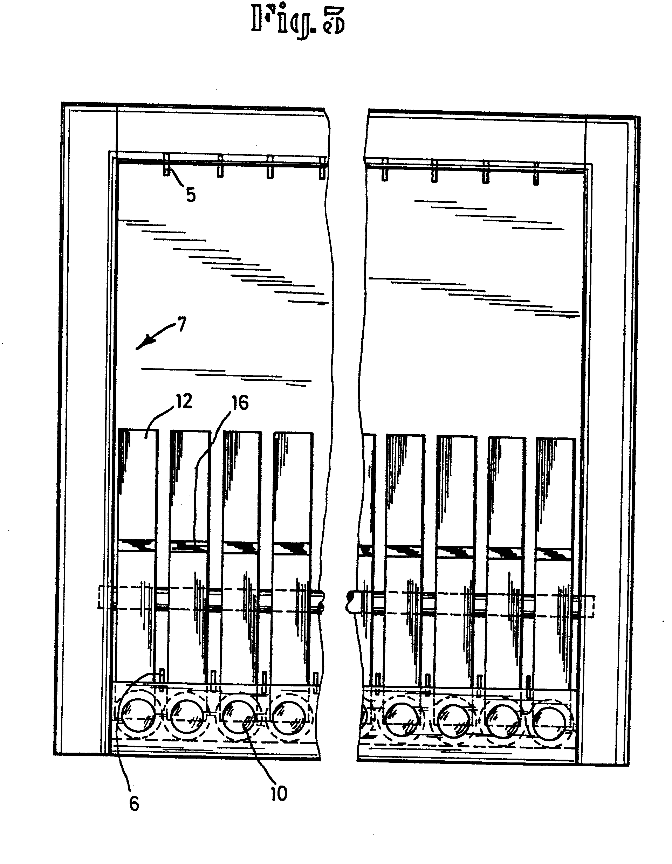

Fig. 3      in größerem Maßstab eine Frontansicht auf den Kassettenspender.

In den Zeichnungen ist mit 1 ein Gehäuse bezeichnet, das aus einer oberen Wand 2, einer Gehäuserückwand 3 und einem Gehäuseboden 4 besteht. In der oberen Wand 2 und in dem Gehäuseboden 4 sind Trennwände 5 und 6 angeordnet, die das Innere des Gehäuses in einzelne Fächer 7 für die Kassetten, vorzugsweise Compact-Disc, begrenzen.

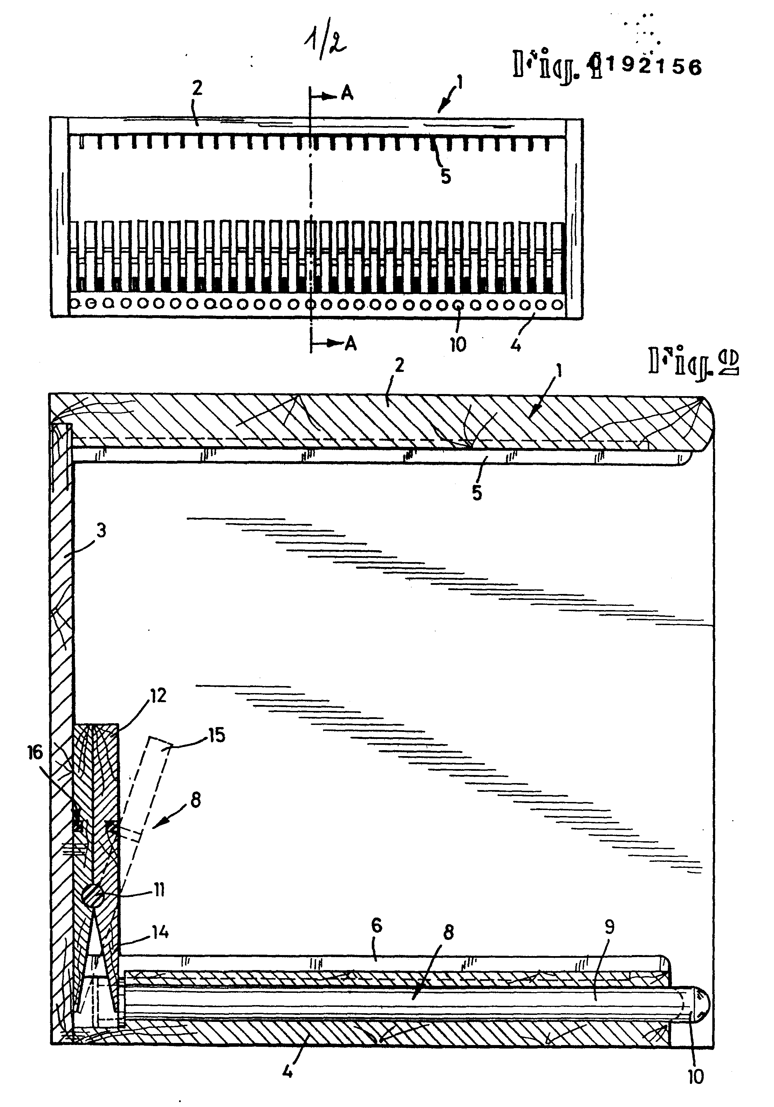

Jedem Fach 7 ist im Gehäuseboden 4 und an der Gehäuserückwand 3 ein Hebelgestänge 8 zugeordnet, das aus einer im Gehäuseboden 4 verschiebbar gelagerten Schubstange 9 besteht, die über die Frontseite des Gehäusebodens 4 vorsteht und hier einen Betätigungsknopf 10 aufweist. An der Gehäuserückwand 3 ist um ein Schwenklager 11 schwenkbar ein Kipphebel 12 gelagert, dessen eines Hebelende 14 an der der Gehäuserückwand 3 zugewandten Endseite der Schubstange 9 anliegt und dessen anderes Hebelende 15 frei in das zugeordnete Fach 7 schwenkbar ist, und zwar in einer Richtung, die der Längsrichtung der Kassette entspricht. Der Kipphebel 12 weist unten ein genügend großes Spiel auf, um diese Bewegung um das Schwenklager 11 auszuführen und kann oberhalb des Schwenklagers 11 über eine Rückstellfeder 16, beispielsweise ein kleines Gummiband od. dgl., befestigt sein, so daß durch diese Rückstellfeder 16 der Kipphebel 12 und auch die Schubstange 9 wieder in die Ausgangsstellung geführt werden und der Kipphebel 12 wieder in die in vollen Linien in Fig. 1 dargestellte Lage geführt wird.

In Fig. 1 ist in der gestrichelten Lage die ausgeschwenkte Stellung des Kipphebels 12 dargestellt, die dann erreicht wird, wenn die Schubstange 9 durch Betätigen des Betätigungsknopfes in Richtung ihrer Längsachse in der entsprechenden Bohrung im Gehäuseboden 4 verschoben wird.

Aus der voraufgehenden Beschreibung ist erkennbar, daß das Vorschieben der in der Zeichnung nicht dargestellten Kassette ausschließlich vom Weg und der Kraft abhängt, die am Betätigungsknopf 10 ausgeübt wird, d.h. die Kassette wird nicht unter Zwischenschaltung einer Feder od. dgl. nach vorne geschleudert.

**Patentansprüche:**

1.  Kassettenspender, insbesondere für Compact-Disc mit einem Gehäuse (1), Trennwänden (5, 6), die das Gehäuse in je einer Kassette zugeordnete Fächer (7) unterteilen, wobei jedem Fach (7) ein Auswerfer zugeordnet ist, der einen an der Frontseite des Gehäuses (1) betätigbaren Betätigungsknopf (10) aufweist und über ein im Gehäuseboden (4) und innen an der Gehäuserückwand (3) angeordnetes Hebelgestänge (8) auf die Rückseite der Kassette wirkt, <u>dadurch gekennzeichnet</u>, daß

    a) der Betätigungsknopf (10) mit einer im Gehäuseboden (4) in Längsrichtung der Kassette verschiebbaren Schubstange (9) verbunden ist,

    b) innen an der Gehäuserückwand (3) in Richtung der Schubstange (9) schwenkbar ein Kipphebel (12) gelagert ist,

    c) das eine Hebelende (14) des Kipphebels (12) von der Schubstange (9) beaufschlagbar ist und das andere Hebelende (15) an der Rückseite der Kassette anliegt.

2.  Kassettenspender nach Anspruch 1, <u>dadurch gekennzeichnet</u>, daß der Kipphebel (12) gegen die Wirkung einer Rückstellfeder (16) verstellbar ist.

Fig. 1    0192156

Fig. 2

0192156

## Fig. 5